# FASCICULE DE BREVET EUROPEEN

(11) **EP 3 083 021 B1**
(45) Date de publication et mention de la délivrance du brevet: **10.01.2018**
(21) Numéro de dépôt: 14814971.9
(22) Date de dépôt: 27.11.2014
(51) Int. Cl.: B01F 3/04, B01F 5/02, C02F 1/20, C02F 11/14, C02F 1/24, C02F 1/52, C02F 1/56, C02F 1/72, C02F 1/74, C02F 11/12

(54) **PROCÉDÉ DE DÉSODORISATION D'UNE BOUE ET DISPOSITIF METTANT EN OEUVRE UN TEL PROCÉDÉ**
VERFAHREN ZUM DESODORIEREN VON SCHLAMM UND VORRICHTUNG ZUR DURCHFÜHRUNG DES VERFAHRENS
METHOD OF DEODORIZING SLUDGE AND DEVICE FOR PERFORMING SAID METHOD

(30) Priorité: 27.11.2013 FR 1361698
(43) Date de publication de la demande: 26.10.2016
(73) Titulaire: Orege, 78117 Toussus-le-Noble (FR)
(72) Inventeur: CAPEAU, Patrice, F-13013 Marseille (FR); GENDROT, Pascal, F-78350 Jouy en Josas (FR)
(74) Mandataire: Benech, Frédéric
(86) Numéro de dépôt international: PCT/FR2014/053058
(87) Numéro de publication internationale: WO 2015/079171

(56) Documents cités:
- FR-A1- 2 966 819

## Description

La présente invention concerne un procédé de désodorisation d'une boue alimentée en flux continu ou semi-continu à un débit Q.

Elle concerne également un dispositif de désodorisation de boue mettant en oeuvre un tel procédé.

Elle trouve une application particulièrement importante, bien que non exclusive, dans le domaine de l'élimination des odeurs et de la réduction de volume des boues organiques ou biologiques, en vue d'une utilisation ultérieure, par exemple pour épandage.

Quand on traite des eaux usées industrielles ou communales, on obtient, indépendamment des eaux traitées, des boues qui contiennent une importante quantité de matière organique.

Ces boues incorporent des micro-organismes notamment sous la forme de bactéries aérobies et anaérobies, qui dès qu'elles sont privées d'oxygène, évoluent vers les régimes anaérobies provoquant rapidement des phénomènes d'odeurs nauséabondes.

Lors de la respiration des bactéries, il se forme en effet de l'hydrogène sulfuré, du méthane, ainsi que des substances d'odeurs désagréables comme les mercaptans ou encore de l'ammoniaque.

De façon générale et pour traiter et éliminer les boues organiques, il existe plusieurs techniques. Soit on les répand directement sur les terres de cultures, soit on les épaissit en leur extrayant le carbone en régime anaérobie contrôlé, soit on les essore aux moyens de filtres bandes ou de centrifugeurs.

Les techniques qui existent d'extraction de l'eau hors des boues sont en effet essentiellement le compactage qui augmente la teneur (en % en poids du mélange total) en composé solide de l'ordre de 5%, la centrifugation ou la filtration qui augmentent l'une et l'autre la teneur en composé solide de 18 à 25%, et enfin le séchage (par combustion ou épandage pendant plusieurs semaines) qui augmente la teneur en composé solide de 90 à 95%, et ce en sachant que la teneur en poids de composé solide des boues d'épuration avant le traitement est en général comprise entre 0,1 à 1% du poids total de l'effluent.

Tous ces traitements postérieurs ne règlent cependant pas le problème des odeurs.

Lors de leur utilisation, déploiement et/ou de leur circulation, les boues transportées dégagent en effet des odeurs nauséabondes qui gênent l'exploitation sereine, des installations sans danger pour le personnel.

On connaît déjà (FR 2 412 505) des procédés de désodorisation de boues dans lesquels on traite les boues avec des composés dégageant de l'oxygène actif comme le peroxyde d'hydrogène, les perborates alcalins, les persulfates alcalins etc... De tels procédés sont couteux car ils nécessitent notamment l'ajout régulier et systématique de réactifs spécifiques.

On connaît également des procédés nécessitant l'ajout aux boues d'oxydes d'azote gazeux (NO, NO₂, N₂O, N₂O₃ etc...), le temps de contact des boues avec l'oxyde d'azote gazeux étant de plusieurs dizaines de minutes (par exemple 300 minutes).

L'idée est ici de maintenir les boues en contact suffisamment longtemps avec l'oxyde d'azote gazeux pour que les échanges chimiques se fassent avant traitement de déshydratation proprement dit.

Tous ces traitements connus de l'art antérieur présentent donc des inconvénients soit liés à la nécessité d'ajouter des réactifs couteux et/ou compliqués à mettre en oeuvre, soit liés au temps de traitement, et aux résultats parfois peu fiables et/ou non aisément reproductibles.

Ils ne permettent pas et/ou ne préparent pas non plus la déshydratation des boues en tant que telle.

On connait aussi (FR 2 966 819) un procédé d'assèchement de boue liquide par mélange de boue et d'air dans une enceinte sous certaines conditions. Si un tel procédé permet de bons résultats, il peut encore être amélioré notamment concernant la désodorisation de la boue obtenue.

La présente invention vise à fournir un procédé et un dispositif de désodorisation des boues répondant mieux que ceux antérieurement connus aux exigences de la pratique, notamment en ce qu'elle va permettre l'obtention d'une boue sans odeur et/ou avec une odeur d'humus, tout en autorisant une excellente déshydratation et/ou une déshydratation (effectuée ensuite de façon connue) bien supérieure à celle obtenue avec les techniques existantes, et ce de façon très rapide, l'utilisation du procédé selon l'invention ne nécessitant que quelques secondes avant l'obtention d'un résultat.

En particulier, ce procédé permet d'obtenir d'excellents résultats seul et pour des boues très organiques, c'est à dire essentiellement chargées en phospholipides, polysaccharides, résidus bactériens, acide gras volatils etc... (> 60 % en poids de matière organique par rapport au poids de matière sèche (MS)).

Il autorise également un rendement optimisé lorsqu'il est combiné avec un outil de séparation complémentaire disposé en aval du dispositif (filtre à bande ou centrifugation), améliorant de plus de 5% la dessiccation, par exemple de 10%.

La solution de l'invention présente par ailleurs une très faible consommation électrique et utilise peu de matière consommable (additif) ou une matière peu coûteuse (air comprimé).

De plus, le procédé met en oeuvre un dispositif simple de très faible encombrement, facilement transportable, qui va donc pouvoir être installé sur des sites peu accessibles.

Avec l'invention un fonctionnement en continu est possible, et ce avec des contraintes d'exploitation peu exigeantes.

Enfin, le traitement selon l'invention outre qu'il enlève les odeurs, ne génère par ailleurs aucune pollution. En résumé et avec l'invention on obtient d'emblée un gâteau poreux, déshydraté, sans odeur, constituant un résidu directement épandable et/ou utilisable.

Dans ce but, l'invention propose notamment un procédé de traitement en continu d'un flux de boue liquide dans lequel on injecte le flux à un débit q dans une enceinte en surpression par rapport à la pression atmosphérique, en injectant également de l'air à un débit Q ≥ 5 q dans ladite enceinte, avant évacuation et séparation entre parties solide et liquide obtenues, en aval de l'enceinte, caractérisé en ce que
la boue liquide est une boue organique, le procédé étant appliqué à la désodorisation de la partie solide obtenue,
en ce que l'injection de boue se fait dans une colonne d'air en surpression lui-même injecté audit débit Q ≥ 5 q, ladite colonne s'étendant sur une longueur déterminée L le long d'un axe longitudinal, ladite longueur L, le débit et la surpression de ladite colonne d'air étant agencés pour créer dans l'enceinte un lit fluidisé dans lequel la boue est aérolisée, entre une tuyauterie d'alimentation de l'air et une canalisation ou un réservoir en aval du lit fluidisé obtenu,
en ce que on évacue ledit lit fluidisé dans ladite canalisation ou ledit réservoir que l'on met à la pression atmosphérique ou sensiblement à la pression atmosphérique,
et en ce que on introduit un floculant en continu dans ledit lit fluidisé en aval de l'enceinte dans des conditions agencées pour regrouper et/ou coaguler la matière organique, de sorte qu'il est obtenu une désodorisation de la partie solide obtenue après séparation.

La longueur L, le débit et la surpression dans l'enceinte sont déterminés de façon optimisée et à la portée de l'homme du métier en fonction des qualités et de la constitution des boues traitées et du débit de traitement recherché. De même le floculant est choisi et son débit d'alimentation déterminé en fonction des caractéristiques imposées ci-dessus sur l'enceinte et son alimentation en boue et en air, de façon à regrouper et/ou coaguler la matière organique de façon optimisée.

Ces valeurs sont obtenues s'il y a lieu par réglages successifs à la portée de l'homme du métier, ingénieur en génie chimique.

Concernant les débits Q et q, le débit de gaz est classiquement mesuré en Nm³/h. Il est ici rappelé que la valeur d'un débit gazeux est classiquement donnée en Nm³/h (Normo-mètre cubes/h), le volume (en Nm3) étant ici considéré à sa valeur rapportée à une pression de 1 bar, une température de 20° C et 0 % d'humidité comme classiquement pratiqué par l'homme du métier.

L'enceinte est ainsi alimentée et évacuée en continu au même débit ou sensiblement au même débit d'entrée et de sortie en continu de la boue liquide.

Dans un mode de réalisation avantageux, on ajoute des matières minérales granuleuses dans le flux, par exemple en amont de l'injection d'air, et/ou préalablement dans la boue à traiter.

En introduisant ainsi une boue liquide organique (comprenant par exemple en poids de matière plus de 70% de matière organique), chargée (ou non selon les boues) en matière granuleuse, par exemple du sable ou autre carburant granuleux à l'intérieur d'une colonne pressurisée dans laquelle transite de l'air à un débit supérieur à 5 fois le débit de boue liquide, l'air étant introduit par des (ou une) tubulures situés en partie basse de l'enceinte, et la boue introduite par un tube situé en partie basse de la colonne dans le lit gazeux, le produit liquide subit un éclatement dans le lit gazeux du fait des chocs à son introduction dans l'enceinte.

En fait au fur et à mesure du processus de transfert dans la colonne, le flux traité change de phase, passant d'une émulsion ou de suspension de matière organique dans l'air à une émulsion d'air dans cette matière organique.

De façon spectaculaire, une partie de l'air introduite se diffuse alors de façon homogène sur l'ensemble de la masse organique, en microbulles centimétriques ou millimétriques.

L'émulsion obtenue est de la boue (phase dispersée) dans l'air (phase continue), la boue étant enrobée par l'air, l'effet de brassage et les différentes surpressions permettant par ailleurs de casser en partie les liaisons physiques de type van der waals, et les liaisons de type électriques existantes entre les particules organiques entre elles et avec l'eau.

Le flux est alors à ce stade une soupe dans laquelle l'eau et la matière organique cohabitent mais proposent moins de liaisons physiques.

Le flux est devenu aéré, et même si c'est pendant un temps réduit permet, par l'apport important d'oxygène lié à l'injection d'air, à fort débit, l'élimination des odeurs.

Dans le récipient et par ailleurs, l'action des floculants devient très favorable.

Les floculants qui sont des substances hydrophobes viennent en effet emprisonner des bulles d'air au contact de la boue.

Le flocon formé est alors d'une part très déshydraté et d'autre part très aéré et poreux.

Une boue de masse volumique 1,1 g/cm3 passe quasi instantanément à 0,9 et jusqu'à 0,6 en fin de percolation de l'eau gardée au contact de la boue.

On observe ici que sa masse volumique est proche de, voir inférieure à celle de la pierre ponce, i.e.0,6 g/cm³, en fait de 0,5 à 0,8 g/cm³, pour 0,9 g/cm³ pour la pierre ponce.

Cette porosité micro et millimétrique est favorable à la déshydratation de la masse organique, les pores jouant le rôle de drains.

Il s'agit donc là d'un avantage inattendu obtenu sur des boues à grande majorité organique.

Notons qu'une boue organique classique post floculation à une masse volumique légèrement supérieure à 1 et bien supérieure à 1 après déshydratation par technique classique.

Le floculant venant par ailleurs piéger l'air au contact de la matière organique (MO), cela confère à la MO une grande stabilité biologique.

Ainsi, même au cours du traitement d'une boue issue d'un processus de digestion anaérobie, l'effet immédiat du processus est de casser le phénomène d'odeur. Avec l'invention et après floculation, on observe que la boue est inodore.

Selon son conditionnement postérieur, cet effet peut se prolonger indéfiniment.

Il suffit en effet de structurer cette matière organique, par extrusion ou dilacération, ou encore par un stockage sur une épaisseur de quelques dizaines de centimètres ou de la stocker après épaississement.

Au-delà, de l'eau risque d'être piégée et ne pas pouvoir s'égoutter, amenant alors l'installation à un régime biologique propice à la production d'odeurs nauséabondes.

On peut ici et par exemple prévoir un système d'au moins deux sacs filtrants, l'un en remplissage pendant que l'autre est vidé, avec un seuil de coupure de 100 µm, voire de 300 µm, ou plus par exemple 500 µm, sans altérer la qualité de l'eau, qui reste ainsi de façon extraordinaire en dessous de 100 mg/l de DCO pour des boues biologiques et moins de 200 mg/l pour des boues digérées.

Ce mode de fonctionnement pour sacs de 1m³ à 5m³, permet d'obtenir une excellente traçabilité et une valorisation instantanée des boues avec un MS de 100g/l minimum.

Avantageusement l'invention propose donc également une étape complémentaire de structuration de la boue déshydratée obtenue.

Notons également que la centrifugation produit une boue poreuse, à la masse volumique plus faible que celle de l'eau lorsqu'elle est positionnée en aval de ce procédé.

Par cet effet de structuration, la MO s'assèche très rapidement. Il y a bien sûr moyen, avantageusement d'accélérer la déshydratation notamment en chauffant.

Cette déshydratation rapide associée à une saturation en oxygène du milieu garantit la présence de bactéries aérobies. Si la structuration, centimétrique, est réussie l'appauvrissement en eau est parallèle à la consommation de l'oxygène dissous au point que la population bactérienne diminue par manque d'eau mais n'est jamais en recherche de l'oxygène de N03 ou S04, ce qui aurait pour effet de produire des odeurs nauséabondes, par réduction de ces éléments.

Grace au procédé selon l'invention le gain en redox du milieu se mesure en quelques dizaines de mV, sachant que plus l'aération est prolongée, plus le gain est favorable en redox, jusqu'à une certaine limite, tout comme ce qui concerne l'action de stripping (arrachage) des gaz.

On notera également que l'eau séparée a bénéficié du même traitement d'ordre physique et chimique que la matière organique. L'air n'y est en effet pas piégé mais le redox s'est également élevé, les fractions colloïdales étant fixées à la MO, laissant une eau transparente avec une charge en MES et en matière organique beaucoup plus faible que lorsque les techniques classiques opèrent sans être associées au procédé selon l'invention.

Dans des modes de réalisation avantageux, on a de plus et/ou par ailleurs recours à l'une et/ou à l'autre des dispositions suivantes :
- on injecte le flux de boue dans l'enceinte en vis à vis et à une distance d d'une paroi et/ou d'un écran de ladite enceinte inférieure à une valeur déterminée ;
- d est inférieur à 50 mm ;
- la tuyauterie d'alimentation de l'air est située en amont de l'injection de boue ;
- la pression absolue P de la colonne d'air est supérieure à 1,5 bar.

Avantageusement, la boue est ainsi et par exemple projetée à grande vitesse contre un écran à l'intérieur de l'enceinte, l'extrémité du tube étant en saillie à l'intérieur, par exemple dirigée perpendiculairement et donc située à une distance d ≤ 50 mm de la paroi en vis.

Un dispositif de dispersion de type ressort peut également être prévu.

Avec le procédé selon le mode de réalisation plus particulièrement décrit ici le liquide monte dans le lit fluidisé. Du fait de la force des chocs sur la paroi de l'enceinte et de la proportion entre gaz et liquide on observe alors de façon inattendue un éclatement de la structure solide et/ou colloïdale, le liquide éclaté dans le lit gazeux montant à la vitesse des gaz, de sorte qu'un arrachage (stripping) des molécules odorantes (H₂S, NH₃) est réalisé de façon extrêmement efficace.

Si le stripping (en dénomination anglo-saxonne) est recherché, des conditions physico-chimiques spécifiques peuvent être proposées : augmenter le pH, la température (pour le stripping du NH₃), etc ...

Dans un mode de réalisation avantageux la pression de l'enceinte est maintenue par un système de clapet. En sortie de zone pressurisée, le lit subit par contre une décompression favorable au travail d'agglomération des matières organiques obtenue par l'ajout de floculant.

Le clapet crée en fait la perte de charge permettant la surpression dans l'enceinte. Il est en position fermée à pression maximale, puis fonctionne par exemple en mode oscillatoire. La fréquence du régime oscillatoire est alors établie par la pression maximale du surpresseur.

Par exemple et pour ce faire, l'enceinte étant verticale, on évacue en continu ou par intermittence le flux en partie haute de ladite enceinte par le biais d'une soupape de surpression déclenchant au-dessus d'une valeur seuil déterminée définissant la surpression de la colonne d'air.

Afin d'optimiser l'éclatement, on utilise pour matière minérale et granuleuse, des réactifs chocs de type sable, carbonates, composés poreux drainant de type pouzzolanes, zéolithes, etc... en jouant sur les quantités, la granulométrie, la composition etc... en fonction de l'effluent et des résultats recherchés de façon à la portée de l'homme du métier.

On a pu en effet constater que l'ajout de matériaux granuleux augmente l'efficacité et permet notamment d'aider à casser les liens entre l'eau liée et les matières organiques, mais aussi va alourdir le floc, ce qui facilite ensuite beaucoup sa séparation du liquide.

Dans d'autres modes de réalisation avantageux, on a encore recours à l'une et/ou à l'autre des dispositions suivantes :
- on sépare en continu la matière solide du liquide par filtration dans des sacs successifs chargés au fur et à mesure de leur remplissage par la matière solide filtrée ;
- l'air circule avec un débit Q ≥ 20q, par exemple supérieur à 40q, à 60q ou 100q, ou compris entre 20 fois et 60 fois q ;
- le débit q est supérieur ou égal à 10 m3/h, le débit Q étant supérieur ou égal à 100 Nm3/h par exemple supérieur à 200 Nm3/h et la pression relative dans l'enceinte supérieure ou égale à 1 bar (pression absolue 2 bars), par exemple supérieure ou égale à 1, 2 bars ;
- le floculant est ajouté dans des proportions comprises entre 0,5 % et 3 % du taux de matière sèche contenue dans la boue. Par taux de matière sèche on entend le % en poids de solide sur le % en poids total de l'effluent. Par exemple on consommera entre 5 kg et 25 kg de produit commercial par tonne de MS ;
- le floculant est organique de type cationique.

Il s'agit par exemple d'un apport en polymère connu sous les références ASHLAND 860 BS, CIBA 8646 FS, SNF HIB 640 ou 840 des sociétés du même nom.

Par exemple, pour une boue contenant 7 g/l de Matière Solide (MS), on utilise 50 g de polymère brut par exemple préparé à 5 g/l, soit une injection de 10 1 de solution par m3 de boue. L'injection s'effectue avantageusement immédiatement en sortie de la colonne ;
- on dégaze les effluents en sortie de l'enceinte et on utilise les gaz obtenus pour alimenter l'injection d'air en partie basse.

La matière minérale granuleuse est par exemple utilisée à hauteur de 10 %, 5 %, 4 % ou 1 % du taux de MS des boues.

Comme on l'a vu, il s'agit avantageusement de sable, carbonate de calcium, chaux éteinte etc...

Elle est introduite en amont de la colonne par exemple au sein d'une cuve de mélange avec la boue liquide.

Dans un mode de réalisation avantageux il y a de plus un apport de réactif d'oxydation.

Dans certaines applications par exemple lorsque les boues contiennent beaucoup d'acides gras organiques ou que ces boues sont des boues issues de méthaniseur, cet apport supplémentaire permet l'obtenir un excellent résultat, par exemple dans des proportions de 1 l de H202 pour 1 m3 de boue contenant 40 g/l de MS.

Egalement avantageusement, il peut être prévu un apport de réactif d'aide à la coagulation des matières organiques : par exemple pour une boue de 11 g/l de MS et 8 % de MV (rapport entre matière organique et matière sèche) et pour 500 ml de boue, il est apporté 1 ml de FeC13 (solution à 10 %) à l'introduction du liquide dans la colonne, avant l'introduction post colonne de floculant ;
- le gâteau obtenu est récupéré et déshydraté par séchage, pressage ou centrifugeage pour obtenir une galette solidifiée. Celle-ci présente une excellente microporosité. Cette microporosité donne un avantage considérable à savoir, des sillons permettant une évacuation rapide de l'eau déliée et des pores permettant une forte aération des boues et le maintien d'un régime bactérien aérobie.

L'invention propose également un produit obtenu directement par le procédé tel que décrit ci-avant.

Elle propose également une galette de boue solidifiée et structurée obtenue avec le procédé décrit ci-dessus, qui est caractérisée en ce qu'elle est formée de couches et/ou de bandes de boues disposées l'une sur l'autre de façon aérée.

Avantageusement la galette de boue obtenue est de porosité supérieure à 40 %, par exemple de l'ordre de la porosité de la pierre ponce (de l'ordre de 85 %).

L'invention propose également un dispositif mettant en oeuvre le procédé tel que décrit ci-dessus.

Elle propose par ailleurs un dispositif de traitement d'un flux de boue liquide alimentée en continu à un débit q comprenant des moyens d'alimentation en air à un débit Q ≥ 5 q, une enceinte s'étendant sur une longueur déterminée L et le long d'un axe longitudinal, agencée pour être alimentée par les moyens d'alimentation en air en partie basse et comprenant au moins un tube d'alimentation de la boue situé dans la moitié inférieure de ladite enceinte, des moyens d'injection de la boue audit débit q dans l'enceinte par ledit tube, une canalisation ou un réservoir de sortie du flux de boue aérolisé en aval de l'enceinte, et des moyens de séparation entre partie solide et partie liquide de la boue traitée,
caractérisé en ce que, la boue liquide étant organique, la longueur L, le débit Q et la surpression dans l'enceinte sont agencés pour créer un lit fluidisé,
en ce que ladite canalisation ou ledit réservoir comprennent des moyens de mise à la pression atmosphérique ou sensiblement à la pression atmosphérique
et en ce que le dispositif comprend des moyens d'introduction d'un floculant en continu dans ladite canalisation ou ledit réservoir pour regrouper/coaguler la matière organique dans ladite canalisation ou ledit réservoir en la désodorisant, avant l'introduction dans lesdits moyens de séparation.

Avantageusement le dispositif comprend des moyens d'alimentation en matière minérale granuleuse dans le flux de boue en amont des moyens en alimentation en air.

Dans un mode de réalisation avantageux au moins un tube d'alimentation de la boue à désodoriser situé dans la moitié inférieure de ladite enceinte est prévu, l'extrémité du dit tube étant en saillie à l'intérieur de l'enceinte, située au-dessus de l'alimentation en air et à une distance d de la paroi en vis à vis telle que d ≤ 50 mm.

Avantageusement également le dispositif est agencé pour que le flux soit évacué en partie haute par le biais d'une soupape de surpression par exemple déclenchant au-dessus de 2 bars absolus.

Dans un mode de réalisation avantageux l'enceinte ayant un diamètre D, la longueur déterminée L est supérieure à 10 fois D.

Egalement avantageusement la canalisation de sortie est de diamètre d₀ compris entre 0,5 D et 0,9 D.

L'invention propose également un dispositif comprenant des moyens d'alimentation d'un réactif liquide d'oxygénation ou de coagulation, à un débit déterminé.

Avantageusement le dispositif comporte des moyens de récupération de la boue traitée déshydratée formée par au moins un sac ou une benne de filtration, un lit de séchage étant assuré par une couche drainante, constituée de sable.

Le dispositif comprend par exemple également des moyens de récupération et de recyclage de la matière minérale granuleuse.

Dans un mode de réalisation avantageux le dispositif comprend de plus des moyens d'extrusion de la boue traitée déshydratée en boudins séparés en présence d'air comprimé.

Les moyens d'extrusion sont par exemple formés par une pièce cylindrique percée d'une pluralité de trous dans laquelle la boue est compactée et extrudée par les trous.

L'invention sera mieux comprise à la lecture de la description qui suit de modes de réalisation donnés ci-après à titre d'exemples non limitatifs. La description se réfère aux dessins qui l'accompagnent dans lesquels :
La figure 1 est un schéma de fonctionnement d'un mode de réalisation d'un dispositif selon l'invention.
La figure 2 illustre une variante de fin de traitement de la boue, selon un autre mode de réalisation de l'invention.

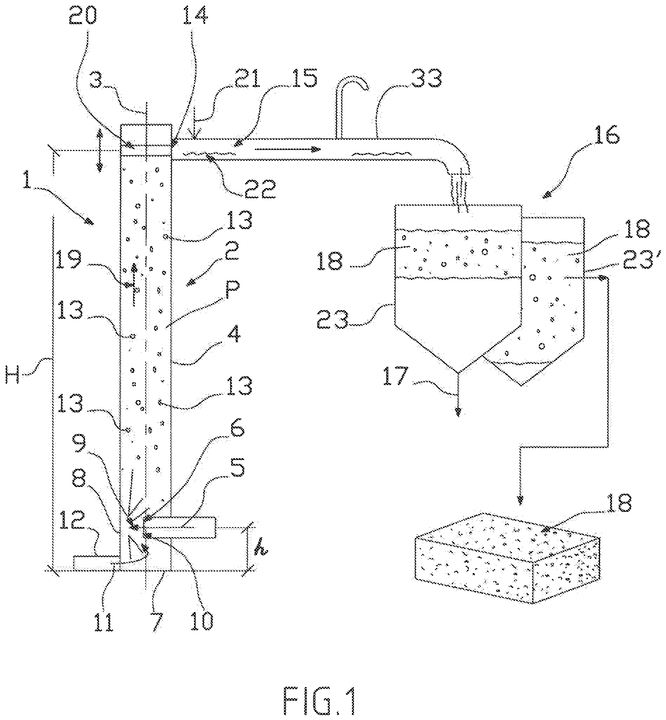

La figure 1 montre un dispositif ou réacteur 1 formé d'une enceinte 2, oblongue, s'allongeant autour d'un axe 3, par exemple formé par une colonne cylindrique verticale 4 de petit diamètre, par exemple 20 centimètres. On injecte la boue (flèche 5) par un piquage 6, à un débit q par exemple 5m³/h.

Le piquage est situé en partie basse de l'enceinte, par exemple à une distance h du fond 7 de l'enceinte comprise entre le dixième et le cinquième de la hauteur H de l'enceinte.

Ce piquage est situé et débouche à une distance de quelques centimètres de la paroi 8 en vis à vis et permet une alimentation en pression du flux de boue ce qui entraîne un choc important au niveau de la rencontre avec la paroi.

En d'autres termes, le pompage des eaux de l'extérieur (non représenté) introduites dans l'enceinte du réacteur 1 de faible diamètre permet un choc du flux de boue dans la zone 9, du fait de la pression de sortie de la ou des pompes d'alimentation (non représentées), qui dépend de la hauteur d'eau desdites pompes d'alimentation en amont des piquages et des pertes de charges du circuit.

Classiquement, en utilisant des pompes industrielles du commerce et un circuit sans trop d'accidents, une pression de 2 bar en sortie 9 du piquage dans l'enceinte est aisément atteignable.

L'énergie cinétique de pompage est alors transformée en énergie de choc, maximisée en augmentant la vitesse d'introduction dans l'enceinte pour la sortie du piquage par un ajustage 10 de dimensions réduites, mais compatibles avec la granulométrie maximum de la boue.

Par ailleurs, et selon le mode de réalisation de l'invention plus particulièrement décrit ici on introduit une quantité d'air surpressé (flèche 11) en dessous de la zone 9 à très gros débit Q très supérieur à 5 Q par exemple 20 Q (en Nm³/h).

Par surpressé on entend une légère surpression qui peut être comprise entre 0,1 bar relatif et 1 bar relatif par rapport à la pression d'introduction des boues, par exemple 0,8 bar relatif.

Cette introduction d'air se fait par un piquage 12 et crée un flux d'air comprimé important dans lequel les gouttes de boues 13 vont s'éclater en permettant l'arrachage par contact des mauvaises odeurs.

Le piquage 12 est situé en dessous de la rencontre des effluents en zone 9, par exemple entre le centième et le dixième de la hauteur H de l'enceinte. Cette introduction d'air augmente également le niveau énergétique de l'enceinte, en surpression par rapport à sa sortie 14 d'évacuation des effluents après traitement.

En partie basse du réacteur (fond 7), de façon connue en elle-même, il est prévu une purge (non représentée) des éléments trop denses qui ne s'échappent pas par le dessus du réacteur et qui est vidée séquentiellement.

A la sortie 14 du réacteur s'échappent l'émulsion d'air et de boues 15 dans une canalisation ou réservoir R de sortie agencé pour être à la pression atmosphérique (évent E), par exemple formé par une canalisation de petit diamètre (par exemple 20 cm) qui après décantation en 16, donne une eau transparente 17 physiquement séparée de la matière solide 18, avec un taux de matière solide très bas, inférieur notamment à 30 mg/l voire à 10 mg/l, alors qu'initialement il pouvait avoisiner plus de 500 mg/l.

La matière solide 18 décolloïdée, obtenue à ce niveau est plus poreuse et par la suite aisément compactable. Elle peut même, en fonction de son taux de matière organique initiale, être directement peletable en sortant du réacteur.

Le gaz extrait du réacteur sort avec l'eau et la boue au débit du surpresseur et peut être récupéré, traité et le cas échéant recyclé pour être réutilisé en partie basse du réacteur.

A noter que la présence de matières grossières du type sable, gravier etc, augmente le nombre de chocs et améliore de ce fait le processus.

La pression P de l'enceinte 2 est quant à elle agencée et/ou réglée pour optimiser l'énergie interne en générant un flux ascensionnel 19 très rapide (par exemple 30 m/s ou 40 m/s), sortant par le haut.

Une telle pression est donc déterminée en fonction des caractéristiques fonctionnelles du circuit (Hauteur d'eau de pompes) mais aussi du type d'effluents et des débits de traitement recherché.

La dimension finalement choisie du réacteur sera également déterminée par l'homme du métier en fonction des connaissances de base de l'ingénieur du domaine du génie chimique et du diagramme des flux.

La pression et la sortie sont par exemple assurées par le biais d'une vanne soupape 20 qui libère le flux lorsque la pression donnée est dépassée.

Comme le procédé selon l'invention met en oeuvre une agitation en trois phases, solide, liquide et gazeuse, il est nécessaire en sortie, de mettre une séparation tenant compte du dégazage, de la phase solide plus dense que l'eau et de l'évacuation de l'eau.

Dans le mode de réalisation de l'invention plus particulièrement décrit, on additionne à la sortie de la soupape un floculant (flèche 21), par un dispositif doseur connu en lui-même (non représenté).

Cette addition se fait par exemple dans la zone 22 à la sortie des moyens d'évacuation (vanne ou soupape 20), en continu du liquide ayant pénétré dans l'enceinte la vanne ou soupape 20, qui s'ouvre au-delà d'une pression déterminée dans l'enceinte, par exemple 1,3 bar.

Il est également possible de ne pas prévoir de vanne, le circuit en aval lui-même constituant la perte de charge nécessaire au maintien en surpression relatif de l'enceinte, par exemple par le biais d'un venturi.

L'émulsion 15 est alors évacuée en partie haute pour aboutir dans un sac de filtration 23 connu en lui-même.

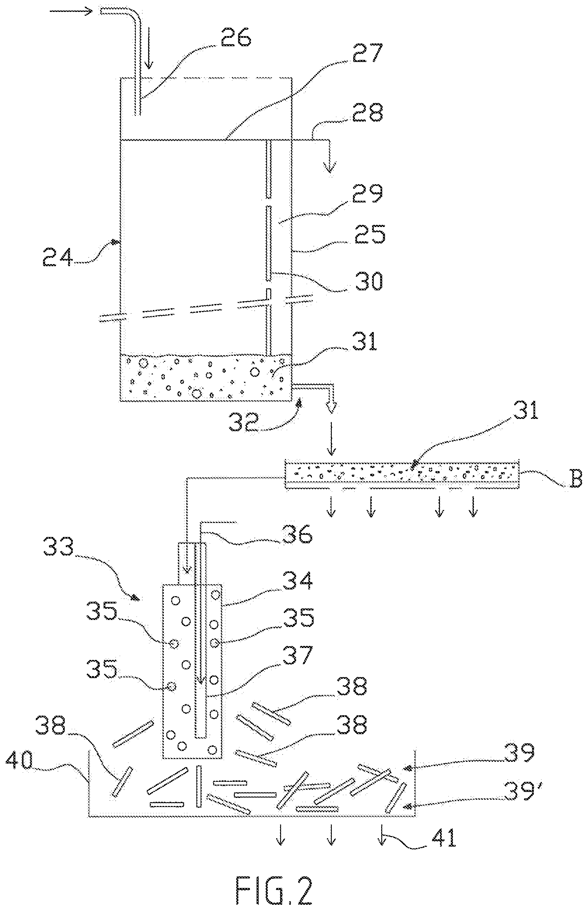

Mais ce sac peut être remplacé par un bac 24 (voir figure 2).

Par exemple, ce bac 24 de décantation est constitué par une cuve cylindrique 25 dans laquelle aboutit la tuyauterie d'évacuation 26 au-dessus du niveau 27 de fonctionnement, pour être à la pression atmosphérique.

Le bac 24 se vide quant-à-lui par trop plein en 28, au travers d'une portion 29 de cuve latérale non turbulente séparée du reste de la cuve par une paroi 30 ajourée par endroits.

La matière solide décantée 31 (figure 2) ou filtrée 18 (figure 1) est évacuée en partie basse 32, ou avec le sac 23' une fois plein pour pouvoir être traitée ultérieurement.

L'émulsion ainsi brassée et alimentée en air, reste dans le réacteur pendant une période correspondant au rapport relatif entre les débits, le volume et la pression.

Il est donc conservé par exemple pendant un temps de séjour de quelques secondes, par exemple inférieur à 1mn avant d'être évacué.

Ce temps peut même être très inférieur puisqu'avec un débit d'effluent supérieur à 20m³/h on peut par exemple rester dans l'enceinte un temps inférieur à 10 secondes.

Le débit d'alimentation en boue a quant à lui une action directe sur la vitesse de percussion, sachant que le temps de contact et de séjour dans le réacteur sous pression joue également sur la vitesse de formation des flocs et de leur décantation.

Le débit d'air et l'influence de la pression dans le réacteur sont par ailleurs des éléments qui, au vue du résultat recherché, vont être adaptés, de façon à la portée de l'homme du métier.

L'eau obtenue en surnageant ou filtrée est d'une grande pureté et elle est évacuée elle-même en continu.

La boue 31 obtenue en partie basse du bac de décantation est-elle, évacuée soit en continu, soit sous forme discontinue, selon des périodes déterminées, par exemple une fois par jour.

Le fait de réévacuer cette boue très vite augmente sa qualité notamment en ce qui concerne sa bonne porosité.

Dans le mode de réalisation plus particulièrement décrit ici la boue 31, égouttée dans un bac mobile B est ensuite introduite par exemple par pompage dans un extrudeur 33 formé d'un tube cylindrique fermé 34 percé d'orifices 35, au travers desquels la boue est poussée par exemple par introduction d'air comprimé en 36 via un tube 37 plongeant dans le tube 34. La boue sort alors sous forme de boudins ou bâtons 38, qui sont déposés par gravité en couches 39 39' par exemple dans un récipient 40 ou dans le cas d'installations mobiles directement sur un terrain d'épandage. L'eau résiduelle 41 coule et s'évacue facilement du fait de la grande aération des couches 39, 39' qui sèchent donc encore plus rapidement.

De façon générale, et avec la mise en oeuvre du dispositif décrit ci-dessus, on constate une modification importante du niveau d'oxydation, le stripping de la boue permettant de passer d'un redox - 250 mV à + 250 mV.

Par ailleurs les mesures d'odeur réalisées sur le NH3, Mercaptans et le H2S montrent qu'avec l'invention, la boue organique (80 % de matière organique) issue d'une station d'épuration classique d'une commune d'habitants et passée dans le dispositif décrit ci-dessus en référence à la figure 1, à un débit de 10 m³/h avec un débit d'air comprimé de 100 Nm³/h et l'ajout d'un floculant classique (polymère) présente les caractéristiques suivantes :
□ Pas d'odeur d'ammoniac (mesurée < 10 ppm)
□ Pas d'odeur d'H2S (mesurée < 10 ppm)
□ Pas d'odeur de mercaptans (mais mesuré > 100 ppm).

On observe également une accélération de la biodégradation : En 1 mois le taux de matière organique passe de MV = 76,8% à MV = 53,2%

Le traitement opéré grâce au procédé et réacteur selon l'invention permet ainsi d'obtenir un gâteau poreux et déshydraté, la boue récupérée étant vide, sèche et manipulable. Quelques heures suffisent contre trois mois dans le cadre d'une utilisation dite de séchage classique, pour obtenir un résultat comparable, la boue obtenue étant sans odeur ou avec une odeur d'humus, et donc plus facilement recyclable.

Comme il va de soi et comme il résulte également de ce qui précède, la présente invention n'est pas limitée aux modes de réalisation plus particulièrement décrits. Elle en embrasse au contraire toutes les variantes et notamment celles où les orifices peuvent être des ajutages, des tubes pénétrant à l'intérieur de l'enceinte pour minimiser la distance entre les sorties et augmenter la force des chocs, on utilise des réactifs en amont comme du sable, du carbonate de calcium, de la chaux éteinte, l'extrudeur est différent et/ou remplacé par des moyens par exemple à lames, pour aérer encore plus la boue obtenue et faciliter encore sa rapidité de séchage.

## Revendications

1. Procédé de traitement en continu d'un flux de boue liquide dans lequel on injecte le flux à un débit q dans une enceinte en surpression par rapport à la pression atmosphérique, en injectant également de l'air à un débit Q ≥ 5 q dans ladite enceinte, avant évacuation et séparation entre parties solide et liquide obtenues en aval de l'enceinte, **caractérisé en ce que**
la boue liquide est une boue organique, le procédé étant appliqué à la désodorisation de la partie solide obtenue,
**en ce que** l'injection de boue se fait dans une colonne d'air en surpression lui-même injecté audit débit Q ≥ 5 q, ladite colonne s'étendant sur une longueur déterminée L le long d'un axe (3) longitudinal, ladite longueur L, le débit et la surpression de ladite colonne d'air étant agencés pour créer dans l'enceinte un lit fluidisé dans lequel la boue est aérolisée, entre une tuyauterie d'alimentation de l'air et une canalisation ou un réservoir en aval du lit fluidisé obtenu,
**en ce que** on évacue ledit lit fluidisé dans ladite canalisation ou ledit réservoir que l'on met à la pression atmosphérique ou sensiblement à la pression atmosphérique, et **en ce que** on introduit un floculant en continu dans ledit lit fluidisé en aval de l'enceinte, dans des conditions agencées pour regrouper et/ou coaguler la matière organique de sorte qu'il est obtenu une désodorisation de la partie solide obtenue après séparation.

2. Procédé selon la revendication 1, **caractérisé en ce qu'**on injecte le flux de boue dans l'enceinte en vis à vis et à une distance d d'une paroi (8) et/ou d'un écran de ladite enceinte inférieure à une valeur déterminée.

3. Procédé selon la revendication 2, **caractérisé en ce que** d est inférieur à 50 mm.

4. Procédé selon l'une quelconque des revendications précédentes, **caractérisé en ce que** la pression absolue P de la colonne d'air est supérieure à 1,5 bar.

5. Procédé selon l'une quelconque des revendications précédentes, **caractérisé en ce que**, l'enceinte (2) étant verticale, on évacue en continu ou par intermittence le flux en partie haute de ladite enceinte par le biais d'une soupape (20) de surpression déclenchant au-dessus d'une valeur seuil déterminée définissant la surpression de la colonne d'air.

6. Procédé selon l'une quelconque des revendications précédentes, **caractérisé en ce que** on sépare en continu la matière solide du liquide par filtration dans des sacs (23, 23') successifs changés au fur et à mesure de leur remplissage par la matière solide filtrée.

7. Procédé selon l'une quelconque des revendications précédentes, **caractérisé en ce que** on ajoute une matière minérale granuleuse dans le flux, celle-ci étant du sable.

8. Procédé selon l'une quelconque des revendications précédentes, **caractérisé en ce que** on ajoute une matière minérale granuleuse dans le flux, la matière minérale granuleuse étant utilisée dans des proportions supérieures à 5 % du taux de matière sèche des boues.

9. Procédé selon l'une quelconque des revendications précédentes, **caractérisé en ce que** l'air circule dans l'enceinte avec un débit Q ≥ 20q.

10. Procédé selon l'une quelconque des revendications précédentes, **caractérisé en ce que** le débit q est supérieur ou égal à 100 Nm3/h et **en ce que** la pression relative dans l'enceinte est supérieure ou égale à 1 bar.

11. Procédé selon la revendication 10, **caractérisé en ce que** le débit q est supérieur ou égal à 200 Nm3/h et la pression relative dans l'enceinte est supérieure ou égale à 1,2 bar.

12. Procédé selon l'une quelconque des revendications précédentes, **caractérisé en ce que** le floculant est ajouté dans des proportions comprises entre 0,5% et 3 % du taux de matière sèche contenue dans la boue.

13. Procédé selon l'une quelconque des revendications précédentes, **caractérisé en ce que** le floculant est un polymère cationique.

14. Procédé selon l'une quelconque des revendications précédentes, **caractérisé en ce que** on dégaze les effluents en sortie de l'enceinte et on utilise les gaz obtenus pour alimenter l'injection d'air en partie basse.

15. Procédé selon l'une quelconque des revendications précédentes, **caractérisé en ce que** le gâteau (18) obtenu est récupéré et déshydraté par séchage, pressage ou centrifugeage pour obtenir une galette solidifiée.

16. Galette de boue organique solidifiée obtenue à partir du procédé selon la revendication 15, **caractérisée en ce qu'**elle présente une porosité supérieure à 40 %.

17. Galette selon la revendication 16, **caractérisé en ce qu'**elle est formée de couches et/ou de bandes de boues disposées l'une sur l'autre.

18. Dispositif (1) de traitement d'un flux de boue liquide alimentée en continu à un débit q comprenant des moyens d'alimentation en air à un débit Q ≥ 5 q, une enceinte (2) s'étendant sur une longueur déterminée L et le long d'un axe longitudinal, agencée pour être alimentée par les moyens d'alimentation en air en partie basse (7) et comprenant au moins un tube (6) d'alimentation de la boue situé dans la moitié inférieure de ladite enceinte, des moyens d'injection de la boue audit débit q dans l'enceinte par ledit tube, une canalisation ou un réservoir de sortie du flux de boue aérolisé en aval de l'enceinte, et des moyens de séparation entre la partie solide et la partie liquide de la boue traitée,
**caractérisé en ce que**, la boue liquide étant organique, la longueur L, le débit Q et la surpression dans l'enceinte sont agencés pour créer un lit fluidisé,
**en ce que** ladite canalisation ou ledit réservoir comprennent des moyens de mise à la pression atmosphérique ou sensiblement à la pression atmosphérique
et **en ce que** il comprend des moyens d'introduction d'un floculant (21) en continu dans ladite canalisation ou ledit réservoir pour regrouper/coaguler la matière organique dans ladite canalisation ou ledit réservoir en la désodorisant, avant l'introduction dans lesdits moyens de séparation.

19. Dispositif selon la revendication 18, **caractérisé en ce que** au moins un tube (6) d'alimentation de la boue à désodoriser situé dans la moitié inférieure de ladite enceinte est prévu, l'extrémité du dit tube étant en saillie à l'intérieur de l'enceinte, située au-dessus de l'alimentation en air et à une distance d de la paroi en vis à vis telle que d ≤ 50 mm.

20. Dispositif selon l'une quelconque des revendications 18 et 19, **caractérisé en ce que** le flux est évacué en partie haute par le biais d'une soupape (14) de surpression déclenchant au-dessus d'une valeur seuil déterminée.

21. Dispositif selon l'une quelconque des revendications 18 à 20, **caractérisé en ce que** l'enceinte est formée d'une colonne cylindrique (4) de diamètre D, la longueur déterminée L étant supérieure ou égale à 10 fois D.

22. Dispositif selon l'une quelconque des revendications 18 à 21, **caractérisé en ce que** la canalisation de sortie est de diamètre d₀ compris entre 0,5 D et 0,9 D.

23. Dispositif selon l'une quelconque des revendications 18 à 22, **caractérisé en ce qu'**il comprend des moyens d'alimentation d'un réactif liquide d'oxygénation ou de coagulation à un débit déterminé.

24. Dispositif selon l'une quelconque des revendications 18 à 23, **caractérisé en ce qu'**il comporte des moyens de récupération de la boue traitée déshydratée formés par au moins un sac de filtration.

25. Dispositif selon l'une quelconque des revendications 18 à 24, **caractérisé en ce qu'**il comporte des moyens (33) d'extrusions de la boue traitée en boudins séparés.

## Patentansprüche

1. Verfahren für die kontinuierliche Behandlung eines Flusses aus flüssigem Schlamm, bei dem der Fluss mit einem Durchfluss g in eine in Bezug auf den Luftdruck unter Überdruck stehende Kammer gespeist wird und dabei ebenfalls Luft mit einem Durchfluss Q ≥ 5 q in die Kammer gespeist wird vor Abführen und Trennen des festen und des flüssigen Anteils, welche nach der Kammer erzielt wurden,
**dadurch gekennzeichnet,**
**dass** der flüssige Schlamm ein organischer Schlamm ist, wobei das Verfahren für die Desodorierung des erzielten festen Anteils angewendet wird,
das Speisen von Schlamm in eine Säule aus Überdruckluft erfolgt, die selbst mit dem Durchfluss Q ≥ 5 q gespeist wird, wobei die Säule sich auf einer bestimmten Länge L entlang einer Längsachse (3) erstreckt, wobei die Länge L, der Durchfluss und der Überdruck der Luftsäule derart sind, dass in der Kammer eine Wirbelschicht, in der der Schlamm aerosolisiert wird, zwischen einer Luftspeisungsrohrleitung und einem Kanal oder einem Tank nach der erzielten Wirbelschicht entsteht,
die Wirbelschicht in den Kanal oder Tank abgeführt wird, der auf Luftdruck oder im Wesentlichen auf Luftdruck gesetzt wird,
ein Flockungsmittel kontinuierlich in die Wirbelschicht nach der Kammer eingeführt wird unter Bedingungen, die derart sind, dass das organische Material zusammengeführt und/oder koaguliert wird, so dass eine Desodorierung des nach Trennung erzielten festen Anteils erzielt wird.

2. Verfahren nach Anspruch 1,
**dadurch gekennzeichnet,**
**dass** der Schlammfluss in die Kammer gegenüber und mit einem Abstand d von einer Wand (8) und/oder einer Blende der Kammer, der kleiner als ein bestimmter Wert ist.

3. Verfahren nach Anspruch 2,
**dadurch gekennzeichnet,**
**dass** d kleiner als 50 mm ist.

4. Verfahren nach einem der vorhergehenden Ansprüche,
**dadurch gekennzeichnet,**
**dass** der Absolutdruck P der Luftsäule größer als 1,5 bar ist.

5. Verfahren nach einem der vorhergehenden Ansprüche,
**dadurch gekennzeichnet,**
**dass** bei vertikaler Kammer (2) der Fluss kontinuierlich oder stoßweise im oberen Bereich der Kammer über ein Überdruckventil (20) abgeführt wird, das über einem bestimmten Schwellenwert auslöst, der den Überdruck der Luftsäule definiert.

6. Verfahren nach einem der vorhergehenden Ansprüche,
**dadurch gekennzeichnet,**
**dass** der Feststoff kontinuierlich von der Flüssigkeit durch Filtrierung in aufeinander folgenden Beuteln (23, 23'), die nach Maßgabe ihrer Füllung mit dem gefilterten Feststoff ausgewechselt werden.

7. Verfahren nach einem der vorhergehenden Ansprüche,
**dadurch gekennzeichnet,**
**dass** dem Fluss ein körniger Mineralstoff zugesetzt wird, bei dem es sich um Sand handelt.

8. Verfahren nach einem der vorhergehenden Ansprüche,
**dadurch gekennzeichnet,**
**dass** dem Fluss ein körniger Mineralstoff zugesetzt wird, wobei der körnige Mineralstoff in Verhältnissen verwendet werden, die größer als 5% des Trockensubstanzgehalts der Schlämme sind.

9. Verfahren nach einem der vorhergehenden Ansprüche,
**dadurch gekennzeichnet,**
**dass** die Luft in der Kammer mit einem Durchfluss Q ≥ 20q strömt.

10. Verfahren nach einem der vorhergehenden Ansprüche,
**dadurch gekennzeichnet,**
**dass** der Durchfluss q größer oder gleich 100 Nm3/h und der Relativdruck in der Kammer größer oder gleich 1 bar ist.

11. Verfahren nach Anspruch 10,
**dadurch gekennzeichnet,**
**dass** der Durchfluss q größer oder gleich 200 Nm3/h und der Relativdruck in der Kammer größer oder gleich 1,2 bar ist.

12. Verfahren nach einem der vorhergehenden Ansprüche,
**dadurch gekennzeichnet,**
**dass** das Flockungsmittel in Verhältnissen zugesetzt wird, die zwischen 0,5% und 3% des Trockensubstanzgehalts der Schlämme liegen.

13. Verfahren nach einem der vorhergehenden Ansprüche,
**dadurch gekennzeichnet,**
**dass** das Flockungsmittel ein kationisches Polymer ist.

14. Verfahren nach einem der vorhergehenden Ansprüche,
**dadurch gekennzeichnet,**
**dass** die Ausflüsse am Ausgang der Kammer entgast werden und die gewonnenen Gase verwendet werden, um die Luftspeisung im unteren Bereich zu versorgen.

15. Verfahren nach einem der vorhergehenden Ansprüche,
**dadurch gekennzeichnet,**
**dass** der erzielte Kuchen (16) aufgefangen und durch Trocknen, Pressen oder Zentrifugieren dehydratisiert wird, um einen verfestigten Filterkuchenzu erzielen.

16. Filterkuchen aus verfestigtem organischem Schlamm, der mit dem Verfahren nach Anspruch 15 erzielt wird,
**dadurch gekennzeichnet,**
**dass** er eine Porosität aufweist, die größer als 40% ist.

17. Filterkuchen nach Anspruch 16,
**dadurch gekennzeichnet,**
**dass** er durch Schlammschichten und/oder -bahnen gebildet ist, die aufeinander angeordnet sind.

18. Vorrichtung (1) für die Behandlung eines Flusses aus mit einem Durchfluss q kontinuierlich gespeistem flüssigem Schlamm mit Mitteln für die Luftspeisung mit einem Durchfluss Q ≥ 5 g, wobei eine Kammer (2) sich auf einer bestimmten Länge L und entlang einer Längsachse erstreckt und angeordnet ist, um über die Luftspeisungsmittel im unteren Bereich (7) beaufschlagt zu werden, und mindestens ein in der unteren Hälfte der Kammer angeordnetes Rohr (6) für die Schlammspeisung aufweist, Mittel für die Schlammspeisung mit dem Durchfluss q über das Rohr in die Kammer, einen Kanal oder Tank für den Austritt des Flusses aus aerosolisiertem Schlamm nach der Kammer und Mittel für die Trennung des festen Anteils und des flüssigen Anteils des behandelten Schlamms,
**dadurch gekennzeichnet,**
**dass** bei organischem flüssigem Schlamm die Länge L, der Durchfluss Q und der Überdruck in der Kammer derart sind, dass eine Wirbelschicht entsteht,
der Kanal oder Tank Mittel aufweist, um auf Luftdruck zu setzen oder im Wesentlichen auf Luftdruck zu setzen, und
sie Mittel aufweist, um ein Flockungsmittel (21) kontinuierlich in den Kanal oder Tank einzuführen, um das organische Material in dem Kanal oder Tank vor Einführung in die Trennungsmittel zusammenzuführen und/oder zu koagulieren und dabei zu desodorieren.

19. Vorrichtung nach Anspruch 18,
**dadurch gekennzeichnet,**
**dass** mindestens ein Rohr (6) für die Speisung mit dem zu desodorierenden Schlamm in der unteren Hälfte der Kammer vorgesehen ist, wobei das Ende des Rohrs in das Innere der Kammer ragt, die über der Luftspeisung und mit einem Abstand d zu der gegenüberliegenden Wand angeordnet ist, wobei d ≤ 50 mm.

20. Vorrichtung nach einem der Ansprüche 18 und 19,
**dadurch gekennzeichnet,**
**dass** der Fluss im oberen Bereich über ein Überdruckventil (14) abgeführt wird, das über einem bestimmten Schwellenwert auslöst.

21. Vorrichtung nach einem der Ansprüche 18 bis 20,
**dadurch gekennzeichnet,**
**dass** die Kammer durch eine zylindrische Säule (4) mit einem Durchmesser D gebildet ist, wobei die bestimmte Länge L größer oder gleich 10 Mal D ist.

22. Vorrichtung nach einem der Ansprüche 18 bis 21,
**dadurch gekennzeichnet,**
**dass** der Austrittskanal einen Durchmesser d₀ aufweist, der zwischen 0,5 D und 0,9 D liegt.

23. Vorrichtung nach einem der Ansprüche 18 bis 22,
**dadurch gekennzeichnet,**
**dass** sie Mittel für die Speisung mit einem flüssigen Reagens zur Sauerstoffanreicherung oder Koagulation mit einem bestimmten Durchfluss aufweist.

24. Vorrichtung nach einem der Ansprüche 18 bis 23,
**dadurch gekennzeichnet,**
**dass** sie Mittel zum Auffangen des dehydratisierten behandelten Schlamms aufweist, welche durch mindestens einen Filtrierbeutel gebildet sind.

25. Vorrichtung nach einem der Ansprüche 18 bis 24,
**dadurch gekennzeichnet,**
**dass** sie Mittel (33) zum Extrudieren des behandelten Schlamms als getrennte Stränge aufweist.

## Claims

1. Method for continuous treatment of a stream of slurry in which the stream is injected at a flow rate q into an enclosure which is pressurised with respect to atmospheric pressure, while also injecting air at a flow rate Q ≥ 5 q into said enclosure, before evacuation and separation between solid and liquid fractions obtained downstream of the enclosure, **characterised in that** the slurry is an organic slurry, the method being applied to the deodorisation of the solid fraction obtained, **in that** the injection of slurry is carried out in a pressurised air column which is itself injected at said flow rate Q ≥ 5 q, said column extending over a given length L along a longitudinal axis (3), said length L, the flow rate and the excess pressure of said air column being arranged so as to create in the enclosure a fluidised bed in which the slurry is nebulised, between an air supply pipeline and a pipe or reservoir downstream of the fluidised bed obtained, **in that** said fluidised bed is evacuated into said pipe or reservoir which is vented or set substantially at atmospheric pressure, and **in that** a flocculant is introduced continuously into said fluidised bed downstream of the enclosure, under conditions arranged so as to collect and/or coagulate the organic matter so that deodorisation of the solid fraction obtained after separation is obtained.

2. Method according to claim 1, **characterised in that** the slurry stream is injected into the enclosure opposite and at a distance d from a wall (8) and/or screen of said enclosure of less than a given value.

3. Method according to claim 2, **characterised in that** d is less than 50 mm.

4. Method according to any one of the preceding claims, **characterised in that** the absolute pressure P of the air column is greater than 1.5 bars.

5. Method according to any one of the preceding claims, **characterised in that**, the enclosure (2) being vertical, the stream is evacuated continuously or intermittently in the top part of said enclosure via a pressure relief valve (20) which opens above a given threshold value defining the excess pressure of the air column.

6. Method according to any one of the preceding claims, **characterised in that** the solid matter is continuously separated from the liquid by filtration in successive bags (23, 23') which are changed as they are filled with the filtered solid matter.

7. Method according to any one of the preceding claims, **characterised in that** a granular mineral material is added to the stream, this being sand.

8. Method according to any one of the preceding claims, **characterised in that** a granular mineral material is added to the stream, the granular mineral material being used in proportions greater than 5% of the percentage of dry matter of the slurry.

9. Method according to any one of the preceding claims, **characterised in that** the air circulates in the enclosure at a flow rate Q ≥ 20 q.

10. Method according to any one of the preceding claims, **characterised in that** the flow rate q is greater than or equal to 100 Nm3/h and **in that** the relative pressure in the enclosure is greater than or equal to 1 bar.

11. Method according to claim 10, **characterised in that** the flow rate q is greater than or equal to 200 Nm3/h and the relative pressure in the enclosure is greater than or equal to 1.2 bars.

12. Method according to any one of the preceding claims, **characterised in that** the flocculant is added in proportions of between 0.5% and 3% of the percentage of dry matter contained in the slurry.

13. Method according to any one of the preceding claims, **characterised in that** the flocculant is a cationic polymer.

14. Method according to any one of the preceding claims, **characterised in that** the effluent is degassed at the outlet of the enclosure, and the gases obtained are used to supply the injection of air in the bottom part.

15. Method according to any one of the preceding claims, **characterised in that** the cake (18) obtained is recovered and dehydrated by drying, pressing or centrifuging in order to obtain a solidified dehydrated cake.

16. Solidified dehydrated organic slurry cake obtained from the method according to claim 15, **characterised in that** it has a porosity greater than 40%.

17. Dehydrated cake according to claim 16, **characterised in that** it is formed of layers and/or strips of slurry disposed one on top of the other.

18. Device (1) for treatment of a slurry stream supplied continuously at a flow rate q, comprising means for supplying air at a flow rate Q ≥ 5 q, an enclosure (2) extending over a given length L and along a longitudinal axis, arranged so as to be supplied by air supply means in the bottom part (7) and comprising at least one slurry supply tube (6) situated in the lower half of said enclosure, means for injecting the slurry at said flow rate q into the enclosure via said tube, a pipe or reservoir for discharge of the nebulised slurry stream downstream of the enclosure, and means for separation between the solid fraction and the liquid fraction of the treated slurry, **characterised in that**, the slurry being organic, the length L, the flow rate Q and the excess pressure in the enclosure are arranged so as to create a fluidised bed, **in that** said pipe or reservoir comprises means for venting or setting substantially at atmospheric pressure and **in that** it comprises means for introducing a flocculant (21) continuously into said pipe or reservoir in order to collect/coagulate the organic matter in said pipe or reservoir while deodorising it, before introduction into said separating means.

19. Device according to claim 18, **characterised in that** at least one tube (6) for supplying the slurry to be deodorised, situated in the lower half of said enclosure, is provided, the end of said tube projecting inside the enclosure, situated above the air supply and at a distance d from the wall opposite such that d ≤ 50 mm.

20. Device according to either one of claims 18 and 19, **characterised in that** the stream is evacuated in the top part via a pressure relief valve (14) which opens above a given threshold value.

21. Device according to any one of claims 18 to 20, **characterised in that** the enclosure is composed of a cylindrical column (4) of diameter D, the given length L being greater than or equal to 10 times D.

22. Device according to any one of claims 18 to 21, **characterised in that** the outlet pipe has a diameter d₀ of between 0.5 D and 0.9 D.

23. Device according to any one of claims 18 to 22, **characterised in that** it comprises means for supplying a liquid oxygenating or coagulating reagent at a given flow rate.

24. Device according to any one of claims 18 to 23, **characterised in that** it comprises means for recovering the treated dehydrated slurry, composed of at least one filtration bag.

25. Device according to any one of claims 18 to 24, **characterised in that** it comprises means (33) for extruding the treated slurry in separate rods.
